# EUROPEAN PATENT SPECIFICATION

(11) **EP 2 801 716 B1**
(45) Date of publication and mention of the grant of the patent: **20.04.2016**
(21) Application number: 14165449.1
(22) Date of filing: 22.04.2014
(51) Int. Cl.: F02M 25/08, B60K 15/035, G01M 3/04

(54) **Leakage detection system and method for fuel tank systems**
Leckdetektionssystem und -verfahren für Kraftstofftanksysteme
Système et procédé de détection de fuite pour systèmes de réservoirs de carburant

(30) Priority: 08.05.2013 US 201313889607
(43) Date of publication of application: 12.11.2014
(73) Proprietor: Volvo Car Corporation, 40531 Göteborg (SE)
(72) Inventor: Larvall, Joakim, 413 23 Göteborg (SE); Forsberg, Magnus, 414 61 Göteborg (SE)
(74) Representative: Kraenzmer, Martin

(56) References cited:
- EP-A1- 1 510 804
- EP-A1- 2 333 290
- EP-A2- 1 457 661
- WO-A1-2008/110381
- DE-C1- 19 502 775
- US-A1- 2010 288 021
- US-A1- 2011 295 482

## Description

### TECHNICAL FIELD

The present invention relates to leakage detection in fuel tank systems.

### BACKGROUND ART

Fuel vapors escaping from the fuel tank system of a vehicle are referred to as evaporative emissions. Such evaporative emissions are regulated in many countries, and limits are imposed on the amount of evaporative emission allowed from a vehicle. In order to secure that significant, i.e., non-allowable, evaporative emissions do not occur, evaporative emission leak detection systems have been developed and implemented in vehicles which are aimed at detecting the onset and presence of such evaporative emissions.

In this text the phrase fuel tank system will be used when referring to a fuel system of a vehicle, and in particular to the gas phase of the fuel system. Also, when referring to a pressure of the fuel tank system, absolute or relative, it is the pressure of the gas phase of the fuel tank system which is referred to.

Evaporative emission leak detection systems comprise pump and motor arrangements and natural vacuum arrangements.

Certain methods for detecting leaks are designed to generate an initial pressure in the fuel tank system. The pressure can be either an over-pressure or an under-pressure. Following pressure generation the means for generating pressure is switched off and the pressure in the tank system is measured in order to discern if the pressure drops or rises by more than a pre-determined reference value during a test interval. If the pressure drops or rises compared to the reference value integrity of the fuel tank system is denied, i.e., a leakage is detected, otherwise integrity is confirmed. A disadvantage with this system is that it is hard to decide whether the change in pressure is a result of a leak or condensation or evaporation of the fuel, or temperature changes in the fuel system. Hence, the test system is dependent on weather conditions, tank volume, type of fuel and other parameters that have an impact on condensation or evaporation of the fuel. As a consequence, the method becomes very time consuming if steady state conditions have to be awaited, and the risk of making an incorrect judgment becomes high, which may lead to high warranty costs for the manufacturer or to increased evaporative emissions in case a leaking fuel system is not found.

Certain pump and motor arrangements are designed to detect leakage by continuously generating a pressure in the fuel tank system. The pressure can be either an over-pressure or an under-pressure. During pressure generation the pressure in the tank system is measured and compared to a pre-determined reference value during a test interval. If the pressure drops or rises compared to the reference value integrity of the fuel tank system is denied, i.e., a leakage is detected, otherwise integrity is confirmed. A disadvantage with this system is that it is hard to decide whether the change in pressure is a result of a leak or condensation or evaporation of the fuel. Hence, the test system is dependent on weather conditions, tank volume, type of fuel and other parameters that has an impact on condensation or evaporation of the fuel. As a consequence, the method becomes very time consuming if steady state conditions have to be awaited.

Certain other pump and motor arrangements comprise a reference leakage arrangement, often in the form of a reference orifice of regulated dimension. A method for leakage detection is then to first pump with the reference orifice open towards atmosphere via an atmospheric port while measuring the pressure thus created. The atmospheric port is then closed and a port towards the tank system is instead opened. The pump now creates a an over or under pressure in the tank system, and if this pressure differs from the pressure created while pumping through the reference orifice by more than a pre-determined amount the integrity of the tank system is denied. In this way a continuous pumping action is first used to determine a reference pressure by means of the reference orifice, followed by a continuous pumping action applied to the fuel tank system to see if the pressure thus created is in line with the reference pressure or if integrity of the fuel tank system should be denied. The problem with condensation and evaporation is present also for this type of arrangement.

A drawback of the pump and motor arrangements described is that the pump must be driven at a constant speed and with a pre-determined, continuous and constant flow, i.e., with no significant changes in pump flow, in order to give reliable detection results. Also, the pump flow must not be affected significantly by varying operating conditions, e.g., operating temperature. Further, it is critical that there are no significant manufacturing variations between different pump and motor individuals, and also between different versions and models of pumps and motors, as a common calibration value is preferred for all pump and motor arrangements. In summary, the requirement of continuous and constant flow in combination with hardware requirements on the pump and motor arrangement results in an increase in the production costs of the pump and motor components, and also in more complicated operation and calibration procedures.

Natural vacuum arrangements are similar in nature to the pump and motor arrangements, except that leakage detection is based on the monitoring of a natural vacuum which arises in the fuel tank system during certain operating conditions. Consequently the natural vacuum methods do not use pumps and motors. As an example, a natural vacuum method may close an electrical switchable valve towards atmosphere and register the pressure changes in the fuel tank system caused by changes in evaporation which in turn are caused by changes in, e.g., temperature. The registered pressure changes are then compared to pre-defined reference values and the integrity of the fuel tank system is determined based on the comparison results.

Natural vacuum arrangements, in order to be accurate, are known to require extensive calibration efforts, and are therefore cumbersome to implement and use. Thus, pump and motor systems are often preferred over natural vacuum arrangements. However, as mentioned above, pump and motor arrangements may be costly and are associated with certain drawbacks as outlined above.

Hence, there is a need for a low cost reliable means for detecting a leakage in a fuel tank system, suitably based on a pump and motor arrangement, but with reduced requirements on the pump and motor components, and with reduced procedural complexity.

US 7,004,013 is directed to an evaporative emission leak detection system with brushless motor. EP 2 333 290 discloses a method to detect a leak in a vehicle fuel tank, the method comprising measuring and logging the pressure in the fuel tank and analyzing the shape of a pressure curve over time.

### SUMMARY OF THE INVENTION

The present disclosure is directed to a method and a system for detecting a leakage in a fuel tank system which seeks to mitigate, alleviate, or eliminate one or more of the above-identified deficiencies in the art and disadvantages singly or in any combination and to provide a low cost reliable means for detecting a leakage in a fuel tank system.

The disclosed method of the disclosure for detecting a leakage in a fuel tank system may comprise the steps of setting a first reference pressure value, and also the step of generating an initial pressure in the fuel tank system, as well as the step of calculating or measuring a pressure difference between the pressure in the fuel tank system and the first reference pressure. The method may further comprise the step of determining a linearity metric, by comparing the measured pressure difference to at least one out of a linear and a non-linear data model, the linearity metric quantifying the non-linearity of said pressure difference as a function of time. The method may also comprise the step of detecting a leakage in the fuel tank system based on the linearity metric, wherein a non-linear pressure difference function of time is indicative of a leakage in the fuel tank system.

Thus, a feature of the disclosure is that leakage detection is based on whether the measured pressure difference between the pressure in the fuel tank system and the first reference pressure is a non-linear function of time, as opposed to being a linear function of time. According to the disclosure, a non-linear behavior of the measured pressure difference as a function of time is indicative of a leakage in the fuel system. Thus, requirements on pump and motor components may be relaxed, since the principle behind leakage detection is not based on the actual initial pressure, which can vary from test to test, and also between vehicles. Nor is the leakage detection based on the characteristics on the generation of the initial pressure, which can be generated by a pressurizing flow with largely uneven and unpredictable flow level, as long as at least some initial pressure is generated.

As noted above, when referring herein to a pressure of the fuel tank system, absolute or relative, it is the pressure of the gas phase of the fuel tank system which is referred to.

It should be noted that the first reference pressure can be, e.g. zero bar. In this case, said pressure difference is really an absolute pressure in the fuel tank system, measured with respect to a unit pressure. Thus, in some embodiments of the disclosed method the measured pressure difference is an absolute pressure, while in other embodiments of the disclosed method the measured pressure difference is a relative pressure which describes the relation between the pressure in the tank system and the pressure of a reference system, e.g. the atmosphere or a different unit pressure, i.e. one bar.

Another feature of the disclosure is that an initial pressure, at a pre-determined pressure level, is generated in the system. The pre-determined pressure level may be a set value or may be the value reached after a certain time out period. Due to evaporation or condensation of the fuel and/or a large leak, it may be that the pre-determined pressure level cannot be reached within the time out period. The pump/compressor is shut off when the pre-determined pressure level or time out period is met. Hence, the means for generating said pressure is disabled or switched off. After that, the time behavior of pressure differences are monitored and used to detect leakage. This is different from the type of systems based on continuous pumping. A consequence of this difference is that the requirements on the pump and motor hardware, calibration, and operating procedure are significantly reduced, as any pump which can generate an over or under pressure in the fuel system can be used with the present disclosure with little or no need for calibration, since a well-defined continuous flow is not a requirement of the present method.

It should be noted that the exponential behavior is independent on the starting pressure difference, which means that the pre-determined pressure level may be the set value or may be the value reached after the time out period and the leak detection according to the present invention is still valid as long as the transients has no significant impact.

According to an embodiment, the method may further comprise the step of setting a second reference pressure value, as well as setting a reference time interval. The method may further comprise the step of determining an approached limit value of the pressure difference after the reference time interval has elapsed from the time of generating an initial pressure, and also the step of detecting a leakage in the fuel tank system if the linearity metric indicates the measured pressure difference to be a non-linear function of time, and the approached limit value is within a pre-determined distance from the second reference pressure.

Thus, in order for the method to declare a leakage in the fuel tank system, i.e. invalidating the integrity of the fuel tank system, two conditions should be fulfilled. Firstly, the pressure difference between that in the fuel tank system and the second reference pressure should exhibit a non-linear behavior when viewed as a function of time. Secondly, the measured pressure difference should appear to approach the second reference pressure, i.e. appear to converge towards the second reference pressure.

In embodiments of the disclosed method, the measured pressure difference is judged to approach or converge towards the second reference pressure if a mathematical model which has been fitted to a set or sub-set of measurements of pressure difference approaches the second reference pressure when extrapolated in time. In other words, if said fitted mathematical model converges towards the second reference pressure, and the measurements of pressure difference indicate a nonlinear trend as opposed to a linear trend, then integrity of the tank system is denied.

Said mathematical model will be further detailed below.

A benefit of this embodiment of the disclosed method is that pressure measurements do not need to be made during an extended period of time, but only until said mathematical model can be fitted to data with sufficient confidence, e.g., after approximately 5 minutes of measurements, as the fitted model parameters can be used to derive the point of convergence of the model extrapolated in time. This shortens leakage detection time, and is a benefit of the present disclosure.

An example of the second reference pressure which can be used in some aspects of the disclosed method is an atmospheric pressure.

Said pre-determined distance from the second reference pressure will vary between embodiments and be dependent on the fuel tank system in general. The pre-determined distance may be determined by experimentations, and will suitably be measured in terms of pressure units, e.g., bars. It may also be adjustable during leakage detection system operation.

According to an embodiment, the step of generating may further comprise generating an initial pressure in the fuel tank system which is higher than the second reference pressure. This means that an overpressure is generated in the fuel tank system. If there is a leakage in the fuel tank system, gas such as fuel vapors and air can be expected to escape via the leakage and, according to the invention, cause a fall in pressure which is non-linear.

According to an embodiment, the step of generating may further comprise generating an initial pressure in the fuel tank system which is lower than the second reference pressure. In this case an under-pressure is generated in the fuel tank system. Differently from the case of generating an over-pressure, gas can now be expected to enter the fuel tank system via a leakage, however, according to the invention the corresponding rise in pressure can be expected to be non-linear as opposed to being linear.

According to an embodiment, the step of measuring may further comprise repeatedly measuring a pressure in the fuel system, and comparing said measured pressure to the first reference pressure in order to determine the pressure difference, as well as repeatedly storing the determined pressure difference together with a corresponding measurement time.

Repeatedly measuring is here to be interpreted as either discretely measuring on a fixed number of occasions or continuously measuring and discretely sampling the measurement and storing the sampled measured pressure value. In this way a time series of pressure differences is generated which can be analyzed and further processed by the leakage detection system.

According to an embodiment, the step of determining a linearity metric may comprise the step of fitting a non-linear data model to the measured pressure difference data and also evaluating the resemblance between the fitted non-linear data model and the monitored pressure difference data, thus determining the non-linearity of the monitored pressure data as a function of time.

Here, the term linearity metric should be interpreted in a broad sense, meaning that many different types of metrics can be envisioned. One way, as indicated above, is to fit a data model to the measured pressure difference data and simply determine a difference between the measured data and the data generated from the fitted data model. The specific method used for fitting the model can also be done in many different ways.

In case there is a large discrepancy between model and measurements, larger than some pre-determined threshold, the measured data cannot be said to resemble the model. Consequently, in case the model is a non-linear model such as an exponential model, the linearity metric does not indicate a non-linear pressure difference behavior in case of a large discrepancy.

According to an embodiment, the step of determining a linearity metric may further comprise the step of fitting a linear data model to the monitored pressure difference data, as well as the step of selecting the linear model or the non-linear model which shows the closest resemblance to the monitored pressure difference data, thus quantifying the non-linearity of the monitored pressure data as a function of time. In this embodiment the resemblance between the measured data and the linear and non-linear models are compared, and a binary decision is made in favor of the model with closest resemblance. This binary decision may simplify the problem of determining non-linearity, as no absolute non-linearity criteria are needed. Rather, the decision on non-linearity can be made on a relative basis.

According to an embodiment, the linear or non-linear data model is fitted to a subset of the monitored pressure difference data, selected by means of a time window of pre-determined start and end instants. Thus, un-wanted phenomena such as transient behavior in the pressure difference can be avoided in the measurement data. The reason being that due to transient effects, a pressure difference curve which is essentially linear can exhibit severe non-linear behavior in the first few seconds following generation of initial pressure.

Normally, transient effects in the pressure difference occur in the tank system following initial pressure generation. The transients are the result of for example evaporation and condensation and are dependent in time on how fast the pressure is generated. The transient effects occur during a longer time period if the pressure is generated fast. In systems suitable for a tank in a vehicle transient effects normally does not last longer than 30 seconds. Also, a monitoring time of about four to five minutes is usually sufficient in order to reach required confidence in the fitting of data models. Thus, according to an embodiment, said time window starts after the transients have no longer an impact, e.g. approximately 30 seconds after initial pressure generation and ends when enough data has been collected to ensure the fitting of data into the model, e.g. approximately 5 minutes after initial pressure generation. Thus initial transient effects are avoided and the measurement time is limited, following which a leakage detection procedure is instigated.

According to an embodiment, the non-linear model is an exponential model of pressure P(t) over time t, which exponential model comprises parameters A, B, C and k, according to P(t)=Ae-^{kt}+Ct+B.

According to an embodiment, the non-linear model is a polynomial model of pressure P(t) over time t, with parameters describing the coefficients of terms in the polynomial. Said polynomial is suitably an affine polynomial.

According to an embodiment, the non-linear model may be the result of interpolation in a table of pre-set values determined by experimental data for the system.

According to an embodiment, the step of fitting a data model may comprise a least-squares method of fitting, and the step of selecting comprises selecting based on the residual least-squares error of the linear model and the non-linear data model. Of course, the least squares method which minimizes the sum of squares of sample error is just one option of fitting. Other performance criteria can be envisioned to be minimized, including Euclidean norm, Frobenius norm, and various types of weighted distance criteria, e.g., weighted least squares.

When fitting data models to measured data, the amount and characteristics of measurement noise may be considered. Thus, it may be beneficial to first filter measurement data prior to fitting a data model in order to suppress measurement noise.

According to an embodiment, the first reference pressure and the second reference pressure may both correspond to atmospheric pressure.

According to an embodiment, the method may further comprise verifying the integrity of a fuel tank system if either the determined approached limit value is not within the pre-determined distance from the second reference pressure or if the determined linearity metric indicates that the monitored pressure difference resembles a linear function of time as opposed to a non-linear function of time.

A leakage detection system for detecting a leakage in a fuel tank system is also disclosed. The leakage detection system may comprise means to generate a pressure in the fuel tank system and means to measure a pressure in the fuel tank system, as well as a control unit arranged to calculate and record a pressure difference between the pressure in the fuel tank system and a first reference pressure over time. The control unit is adapted to determine a linearity metric and an approached limit value with respect to a second pressure.

As discussed above, the linearity metric indicates whether the measured pressure difference is essentially a linear function of time as opposed to being a non-linear function of time.

The approached limit value represents a steady state pressure of the fuel system after a reference time interval has elapsed since the generation of pressure in the fuel tank system, signified by no significant pressure change over time. As mentioned above, the approached limit value is in some aspects of the disclosed method derived from a mathematical model which has been fitted to measurements of pressure in the tank system, or a sub-set of measurement of pressure in the tank system. In some embodiments of the disclosed method, the approached limit value is calculated after pressure measurements have been concluded.

The control unit is adapted to detect a fuel leakage if the linearity metric indicates the measured pressure difference to be a non-linear function of time, and the approached limit value is within a pre-determined distance from a second reference pressure.

The approached limit value may in embodiments be interpreted as a state of lowest potential energy. For instance, if the generated pressure is an over-pressure and there is a leakage somewhere in the fuel tank system, the pressure in the system can be expected to converge to the pressure of the gas surrounding the fuel tank system, which can be an atmospheric pressure. Also, as discussed above, the change in pressure difference in case of leakage can be expected to be a nonlinear function of time, as opposed to being a linear function of time.

According to an embodiment, the control unit is further adapted to adjust the parameters of a non-linear data model to fit the measured pressure difference data, and also to determine the linearity metric by means of calculating the difference between the measured pressure data and the adjusted non-linear data model.

According to an embodiment, the control unit is further arranged to adjust the parameters of the non-linear data model to minimize a least-squares objective function, and to determine the linearity metric by means of the residual least-squares error of the adjusted non-linear model with respect to the measured pressure difference. Alternatively, the control unit may in embodiments use a weighted form a least-squares data fitting, e.g., weighted least squares. According to an embodiment, the control unit is further arranged to detect a fuel leakage if the determined approached limit value of the monitored pressure difference is within a first pre-determined distance from the second reference pressure and the determined linearity metric indicates a non-linear change in the monitored pressure difference over time as opposed to a linear change in the monitored pressure difference over time.

According to an embodiment, the control unit is further arranged to verify the integrity of the fuel system if either the determined approached limit value of the measured pressure difference is not within a first pre-determined distance from the second reference pressure or if the determined linearity metric indicates a linear change in the measured pressure difference over time as opposed to a non-linear change in the measured pressure difference over time.

According to an embodiment, the means to generate a pressure comprises a pump driven by a motor. Other means of pressure generation can also be envisioned, for instance, using an ejector in order to generate an under-pressure in the fuel tank system, or using so-called natural vacuum methods for generating under-pressure in the fuel tank system.

A fuel system comprising leakage detection suitably used in a vehicle is further disclosed herein. The fuel system is connected to atmosphere via a first control valve. The fuel system may comprise a fuel tank connected to one single sensor unit or to an arrangement comprising a plurality of sensor units. The sensor unit or sensor unit arrangement is arranged to measure a pressure in the fuel system and to communicate said measured pressure to a control unit. The fuel system may further comprise a pump driven by a motor. The pump is connected to, i.e., in fluid communication with, the fuel tank via a first port of the pump, the pump further comprising a second port connected to atmosphere via a second control valve. The pump is arranged to generate a pressure difference in the fuel system with respect to an atmospheric pressure.

The control unit is adapted to determine a linearity metric and an approached limit value of the pressure in the fuel system with respect to atmospheric pressure. The linearity metric indicates, as discussed above, whether the monitored pressure difference is essentially a linear function of time as opposed to being a non-linear function of time. The approached limit value indicates a steady state pressure of the fuel system signified by no significant pressure change over time. The control unit is adapted to detect a fuel leakage based on said determined linearity metric and approached limit value. The fuel system may further comprise a canister disposed between the first port of the pump and the fuel tank. Thus, in certain embodiments of the disclosure, an input to the tank from the pump, or an output from the tank to the pump, passes via said canister. The canister is arranged to capture and store an evaporative emission of fuel from the fuel tank. The canister is further connected to a purge valve facilitating the purging of said captured evaporative emission from the canister.

The method and system according to the disclosure may be implemented by measuring from a starting point where transients have no significant impact to an end point where it is possible to see or analyze the asymptotic behavior towards the second reference value. The method and system according to the disclosure may alternatively be implemented by measuring from a starting point where transients have no significant impact and then calculating an end point where it is possible to analyze the asymptotic behavior towards the second reference value.

### BRIEF DESCRIPTION OF THE DRAWINGS

The invention will be described in more detail in the following, with reference to the appended drawings, in which
Fig 1 shows a flowchart of a method of the disclosure, and
Fig 2a shows a first graph visualizing a plurality of pressure difference curves, and
Fig 2b shows a second graph visualizing a plurality of pressure difference curves, and
Fig 3 shows a first fuel tank system of the disclosure, and
Fig 4 shows a second fuel tank system of the disclosure.

### DETAILED DESCRIPTION

As required, detailed embodiments are disclosed herein. However, it is to be understood that the disclosed embodiments are merely exemplary and that various and alternative forms may be employed. The embodiments are included in order to explain principles of the disclosure and not to limit the scope thereof, which is defined by the appended claims. Details from two or more of the embodiments may be combined with each other. The figures are not necessarily to scale. Like reference characters refer to like elements throughout the description. Some features may be exaggerated or minimized to show details of particular components. Therefore, specific structural and functional details disclosed herein are not to be interpreted as limiting, but merely as a representative basis for teaching one skilled in the art. The terminology used herein is for the purpose of describing particular embodiments only, and is not intended to limit the disclosure.

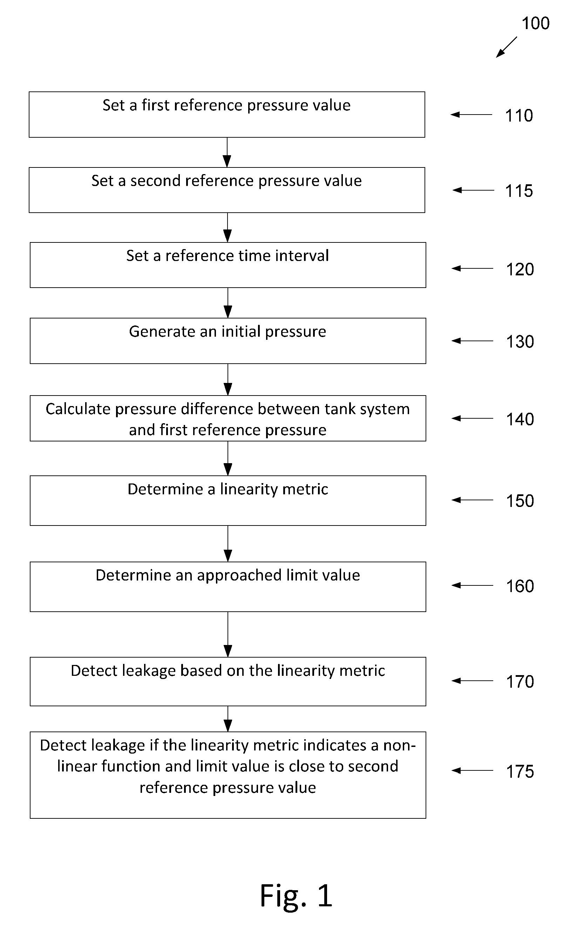

Fig 1 shows a flowchart of a method 100 of the disclosure. The method may comprise, as have been discussed above, and the step 110 of setting a first reference pressure value, and the step 115 of setting a second reference pressure value, as well as the step 120 of setting a reference time interval. Following the setting of reference values, an initial pressure is generated in the fuel tank system in step 130 of the method 100. The method 100 may further comprise the step of measuring the pressure difference between the fuel tank system and the first reference pressure. The method 100 in embodiments may also comprise the step 150 of determining a linearity metric, and also the step 160 of determining an approached limit value. The method 100 may further comprise the step 170 of detecting a leakage in the fuel tank system based on said linearity metric. According to an embodiment, the method 100 detects a leakage if the linearity metric indicates a non-linear pressure difference function of time, and the approached limit value of the measured pressure difference is close to the second reference pressure value.

As noted above, when referring herein to a pressure of the fuel tank system, absolute or relative, it is the pressure of the gas phase of the fuel tank system which is referred to.

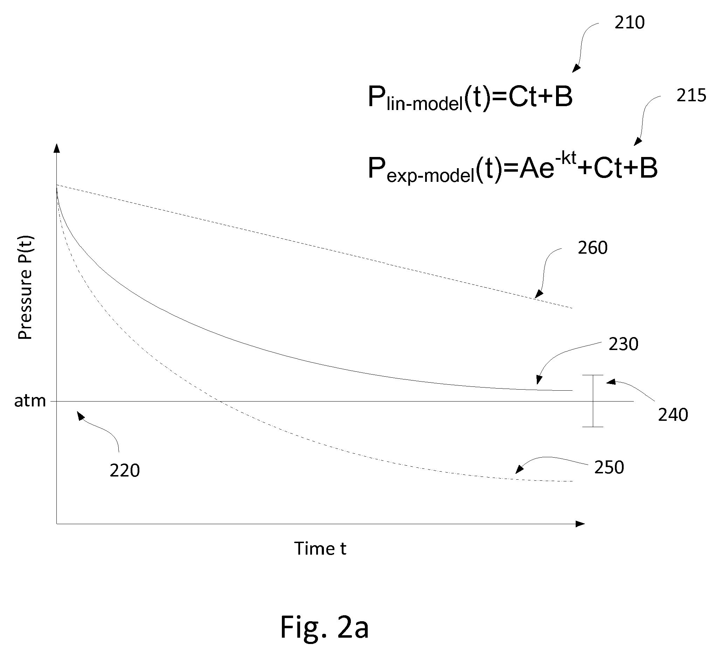

Fig 2a shows a graph visualizing a plurality of pressure difference curves 230, 250, 260. Time is shown on the x-axis, and pressure is shown on the y-axis. The units of time and pressure may be seconds and bars, but other units are also possible. Two exemplary data models are shown, a linear data model 210, and a non-linear data model 215, both of which are functions of time t. The linear data model 210 has two parameters which are adjusted when the model is fitted to some measurement data. The two parameters of the linear model is B describing the model bias, and C describing the rate of change with time. The non-linear data model 215 is an exponential data model with the four parameters A, B, C, and k. It is these four parameters which are adjusted, i.e. determined, when the model is fitted to measurement data. Fig 2a also shows four functions of time. A reference pressure 220 is shown as a straight line, here indicated to be an atmospheric pressure atm. A first non-linear pressure difference curve 230 is shown which approaches the reference pressure curve 220, meaning that it appears to converge to within a distance 240 of the reference curve 220 after some time has passed. A second non-linear curve 250 is shown which does not appear to converge towards the reference curve 220. Also, a linear curve 260 is shown.

Assuming that the y-axis in Fig 2a represents increasing pressure in the direction indicated by the arrow, the pressure difference curves 230, 250, 260 all declines as time progresses. The initial pressure generated in this case is an over-pressure with respect to the reference pressure curve.

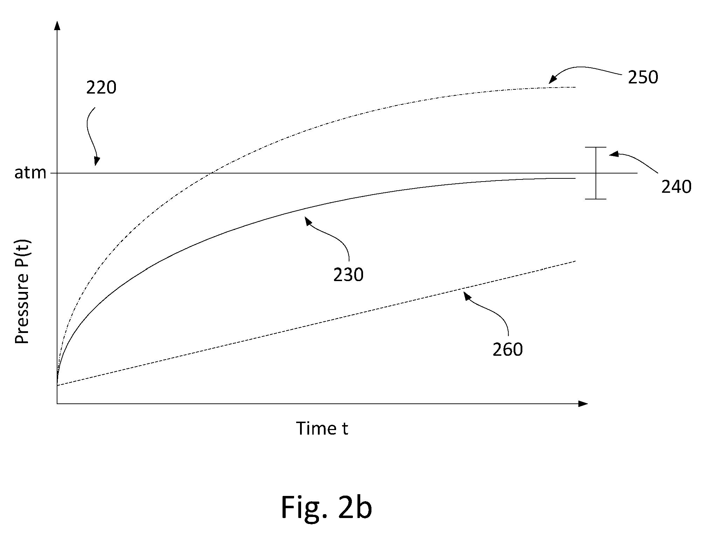

Fig 2b, as opposed to Fig 2a, shows a plurality of pressure difference curves which rise as time progresses, assuming that the y-axis in Fig 2b represents increasing pressure in the direction indicated by the arrow. The initial pressure generated in this case is an under-pressure with respect to the reference pressure curve.

According to an embodiment, the pressure difference curves shown in Fig 2a and Fig 2b represent extrapolated mathematical models which have been fitted to measurements of pressure differences in a tank system. Thus the point of convergence of the curves can be discerned prior to the actual converge instant in time.

The pressure difference curve which exhibits a clear non-linear trend but which does not converge towards the reference pressure 220, and is thus not indicative of a leakage in the fuel tank system, can be caused by evaporation phenomena in the fuel tank system, and condensation phenomena in the fuel tank system. It can be expected that evaporation phenomena in the fuel tank system leads to a steady state pressure which is higher than the reference pressure, while condensation phenomena in the fuel tank system leads to a pressure difference below the reference pressure.

According to the disclosure, curve 260 does not indicate a leakage since it appears to be a linear function of time. The curve 250 is non-linear, hence it is indicative of a leakage. However, it does not appear to converge towards the reference pressure level as defined by curve 220, hence in embodiments no leakage would be declared. The curve 230, however, appears to be non-linear at the same time as it converges to within the pre-determined distance 240 of the reference pressure curve 220. Hence, leakage would be detected by the system.

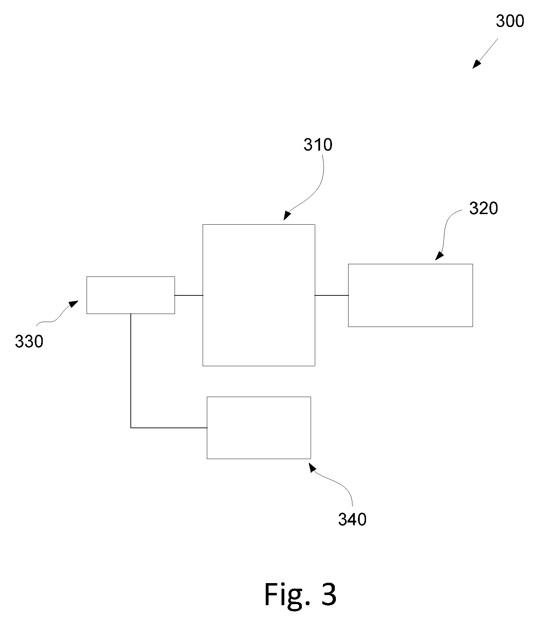

Fig 3 shows a first fuel system 300 of the disclosure arranged to detect a leakage in a fuel tank system. The system 300 comprises a fuel tank system 310, which fuel tank system 310 in embodiments comprises at least a fuel tank. A sensor 330 is disposed in connection to the fuel tank system 310. The sensor is arranged to measure a pressure of the fuel tank system 310, it is therefore in fluid communication with the fuel tank system 310. A control unit 340 is connected to the sensor unit 330. The system 300 further comprises means for pressure generation 320, which means 320 is in fluid communication with the fuel tank system 310.

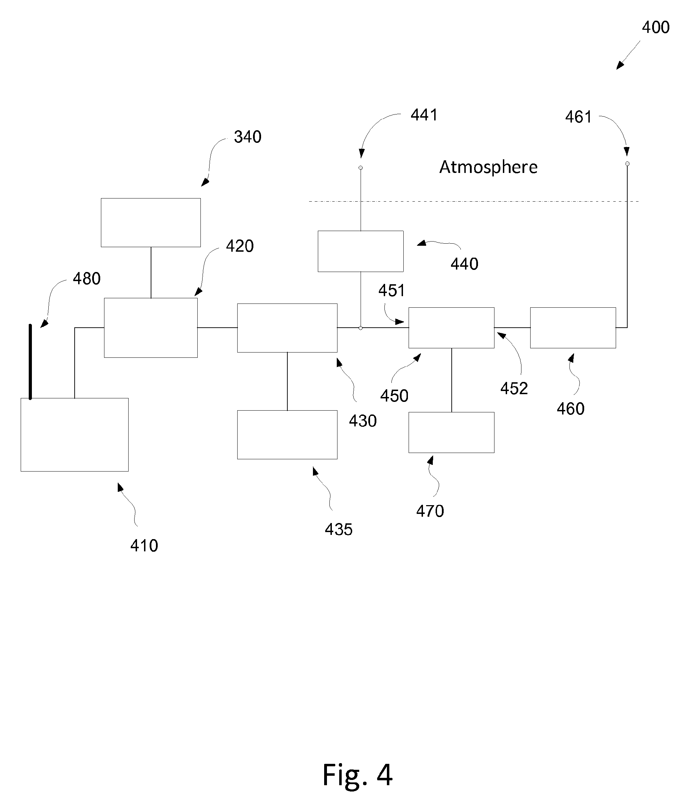

Fig 4 shows a second fuel system 400 of the disclosure arranged to detect a leakage in a fuel tank system. The system 400 may comprise a fuel tank 410 in fluid communication with a pressure sensor unit 420. The pressure sensor unit 420 is connected to a control unit 340 arranged to process pressure measurement data from the pressure sensor unit 420. The fuel tank 410 is also in fluid communication with a canister 430. The fluid communication between the fuel tank 410 and the canister 430 is in embodiments via the pressure sensor 420, but other pressure sensor installations are possible. The canister 430 is further in fluid communication with a purge valve arrangement 435 for purging of the canister 430 contents. The canister 430 and purge valve 435 are in embodiments of the invention part of a so-called evaporative emission control system.

The fuel tank system further comprises a conduit connected to atmosphere 441 via a first control valve 440. This conduit is arranged to facilitate fuel tank system intake or outlet of gases to and from atmosphere.

The fuel tank 410 is further in fluid communication with a pump 450 arranged to be driven by a motor 470. The fluid communication between fuel tank 410 pump 450 is via either of the pressure sensor 420 and the canister 430 or both of the pressure sensor 420 and the canister 430. The pump may comprise a first port 451 towards the fuel tank system, and a second port 452 towards atmosphere 461. A second control valve 460 is disposed between the pump 450 and atmosphere 461.

Note that just a single sensor unit is shown in Fig 3 and Fig 4, however, a plurality of sensor units is possible. Also, pluralities of co-operating control units are possible in embodiments.

It should also be noted that the disposition and arrangement of control valves may vary between embodiments. Thus, the control valve 460 may in embodiments be placed after the pump 450, i.e., between the pump 450 and the fuel tank 410. Further, the control valve 460 may in embodiments comprise a non-return valve.

The location of the pressure sensor unit 420, which pressure sensor 420 is shown in Fig 4 to be located between the fuel tank 410 and the canister 430, may also vary between embodiments. The pressure sensor unit 420 may in embodiments be connected anywhere in the fuel system gas phase, as long as the pressure of the fuel tank system gas phase can be determined by means of the pressure sensor unit 420. For example, the pressure sensor unit 420 may in embodiments be located between the canister 430 and the pump 450.

Fig 4 further shows a fuel tank filler arrangement 480. Clearly, when no fuel cap or other sealing means are present and adapted to seal the fuel tank system, a leakage will be detected by the disclosed method. Consequently, the disclosed method can also be used to detect a missing fuel cap or similar sealing means. Following detection of a missing fuel tank sealing means, e.g., a fuel cap, an alert indicating the fact can be generated.

The fuel tank filler arrangement 480 may in embodiments comprise a sensor arrangement for detecting when the fuel tank filler cap is missing. When such a sensor indicates a missing fuel tank filler cap, leakage detections are suitably discarded by the disclosed method since the leakage detection system cannot be relied upon when the fuel tank system is not properly sealed by the sealing means.

Embodiments of the disclosed method may further comprise the step of classifying a detected leak as being a small leak or a large leak.

Such a classification/approximation can be achieved by using the value A and k in the mathematical non-linear exponential model P(t)=Ae^{-kt} + Ct + B. In general a large value of A and k is an indication of a large leak size, and small values of A and k may indicate a small leak. What values of A and k correspond to what leak sizes may be determined by controlled calibration measurements. The values of C and B correspond to other physical properties than leak size, such as evaporation or condensation of fuel and temperature changes in the fuel tank during the measurement phase. These effects do in general not have an exponential influence on the pressure as a function of time. In this way the test becomes independent of evaporation of fuel and temperature changes, which is a common problem in other methods for leakage detection.

The classification of the leak size may also have a fuel tank gas phase volume dependence. The volume may be measured using the fuel level sensor, or by other methods.

It should be noted that the method of detecting a leak by comparison may be done by using a table of preset values and interpolation of values in the table in order to find the linearity or non-linearity behavior of the measurements.

The classification of small leak or large leak may be done by starting with a polynomial or table and finding a corresponding non-linear exponential model P(t)=Ae^{-kt} + Ct + B, or may be done by using a different mathematical representation that gives the same information as the A and k parameters in the exponential model.

It should be noted that the k-factor does not change along the curve P(t) described by P(t)=Ae^{-kt} + Ct + B and therefore it does not matter where on the curve, i.e. during which time interval the k-factor is measured/calculated as long as the transients has no significant impact.

It should also be noted that the exponential behavior and the k-factor are independent on the starting pressure difference, which means that the pre-determined pressure level may be the set value or may the value reached after the time out period and the leak detection according to the present disclosure is still valid.

The foregoing has described the principles, embodiments and modes of operation of the present disclosure. However, the disclosure should be regarded as illustrative rather than restrictive, and not as being limited to the particular embodiments discussed above. The different features of the various embodiments of the disclosure can be combined in other combinations than those explicitly described. It should therefore be appreciated that variations may be made in those embodiments by those skilled in the art without departing from the scope of the present disclosure as defined by the following claims.

## Claims

1. A method (100) for detecting a leakage in a fuel tank system, the method (100) comprising:
• setting (110) a first reference pressure value;
• generating (130) an initial pressure in the fuel tank system;
• determining (140) a pressure difference between the pressure in the fuel tank system and the first reference pressure;
• determining (150) a linearity metric, by comparing the determined pressure difference to at least one out of a linear and a non-linear data model, the linearity metric quantifying the non-linearity of said pressure difference as a function of time;
• detecting (170) a leakage in the fuel tank system based on the linearity metric, wherein a non-linear pressure difference function of time is indicative of a leakage in the fuel tank system;
**characterized in that** the method further comprises:
• setting (115) a second reference pressure value;
• setting (120) a reference time interval;
• determining (160) an approached limit value of the pressure difference after the reference time interval has elapsed from the time of generating (130) an initial pressure; and
• detecting (175) a leakage in the fuel tank system if the linearity metric indicates the measured pressure difference to be a non-linear function of time, and the approached limit value is calculated to be within a pre-determined distance from the second reference pressure.

2. The method (100) of claim 1, wherein the step of generating (130) further comprises generating an initial pressure in the fuel tank system which is higher than the second reference pressure.

3. The method (100) of claim 1, wherein the step of generating (130) further comprises generating an initial pressure in the fuel tank system which is lower than the second reference pressure.

4. The method (100) of any one of claims 1-3, wherein determining (140) a pressure difference further comprises repeatedly measuring a pressure in the fuel system, and comparing said measured pressure to the first reference pressure in order to determine the pressure difference, as well as repeatedly storing the determined pressure difference together with a corresponding measurement time.

5. The method (100) of any one of claims 1-4, wherein of determining (150) a linearity metric comprises the step of fitting a non-linear data model to the measured pressure difference data and also evaluating the resemblance between the fitted non-linear data model and the monitored pressure difference data, thus determining the non-linearity of the monitored pressure data as a function of time.

6. The method (100) of claim 5, wherein determining (150) a linearity metric further comprises fitting a linear data model to the monitored pressure difference data, as well as selecting the linear model or the non-linear model which shows the closest resemblance to the monitored pressure difference data, thus quantifying the non-linearity of the monitored pressure data as a function of time.

7. The method (100) of claim 5 or claim 6, wherein the linear or non-linear data model is fitted to a subset of the monitored pressure difference data, selected by means of a time window of pre-determined start and end instants.

8. The method (100) of claim 6 or claim 7, wherein the non-linear model is either of an exponential model of pressure P(t) over time t, which exponential model comprises parameters A, B, C and k, according to P(t)=Ae^{-kt}+Ct+B, or an affine polynomial model of a pre-determined degree, which polynomial model comprises parameters describing the coefficients of the polynomial function.

9. The method (100) of any one of claims 5-8, wherein fitting a data model comprises a least-squares method of fitting, and wherein selecting comprises selecting based on the residual least-squares error of the linear model and the non-linear data model.

10. A leakage detection system (300) for detecting a leakage in a fuel tank system (310), the leakage detection system (300) comprising a control unit (340) configured to determine and record a pressure difference between a pressure generated in the fuel tank system (310) and a first reference pressure overtime,
**characterised in**
**that** the control unit (340) is adapted to determine a linearity metric and an approached limit value with respect to a second pressure, the linearity metric indicating whether the monitored pressure difference is essentially a linear function of time as opposed to being a non-linear function of time, the approached limit value indicating a steady state pressure of the fuel system (310) after a reference time interval has elapsed since the generation of pressure in the fuel tank system (310), signified by no significant pressure change over time, and wherein the control unit (340) is adapted to detect a fuel leakage if the linearity metric indicates the determined pressure difference to be a non-linear function of time, and the approached limit value is within a pre-determined distance from a second reference pressure.

11. The leakage detection system (300) of claim 10, wherein the control unit (340) is further adapted to adjust the parameters of a non-linear data model to fit the measured pressure difference data, and also to determine the linearity metric by means of calculating the difference between the measured pressure data and the adjusted non-linear data model, and to also determine the approached limit value by extrapolation of the adjusted non-linear data model.

12. The leakage detection system (300) of claim 11, wherein the control unit (340) is further arranged to adjust the parameters of the non-linear data model to minimize a least-squares objective function, and to determine the linearity metric by means of the residual least-squares error of the adjusted non-linear model with respect to the measured pressure difference.

13. The leakage detection system (300) of claim 12, wherein the control unit (340) is further arranged to detect a fuel leakage if the determined approached limit value of the monitored pressure difference is within a first pre-determined distance from the second reference pressure and the determined linearity metric indicates a non-linear change in the monitored pressure difference over time as opposed to a linear change in the monitored pressure difference over time.

14. The leakage detection system (300) of any one of claims 12-13, wherein the control unit (340) is further arranged to verify the integrity of the fuel system if either the determined approached limit value of the measured pressure difference is not within a first pre-determined distance from the second reference pressure or if the determined linearity metric indicates a linear change in the measured pressure difference over time as opposed to a non-linear change in the measured pressure difference over time.

## Patentansprüche

1. Verfahren (100) zum Detektieren eines Lecks in einem Kraftstofftanksystem, wobei das Verfahren (100) Folgendes umfasst:
- Festlegen (110) eines ersten Referenzdruckwerts;
- Erzeugen (130) eines Anfangsdrucks in dem Kraftstofftanksystem;
- Bestimmen (140) einer Druckdifferenz zwischen dem Druck in dem Kraftstofftanksystem und dem ersten Referenzdruck;
- Bestimmen (150) einer Linearitätsmetrik durch Vergleichen der bestimmten Druckdifferenz mit einem linearen Datenmodell und/oder einem nichtlinearen Datenmodell, wobei die Linearitätsmetrik die Nichtlinearität der Druckdifferenz als eine Funktion der Zeit quantifiziert;
- Detektieren (170) eines Lecks in dem Kraftstofftanksystem anhand der Linearitätsmetrik, wobei eine nichtlineare Druckdifferenzfunktion der Zeit auf ein Leck in dem Kraftstofftanksystem hinweist;
**dadurch gekennzeichnet, dass** das Verfahren ferner Folgendes umfasst:
- Festlegen (115) eines zweiten Referenzdruckwerts;
- Festlegen (120) eines Referenzzeitintervalls;
- Bestimmen (160) eines angenäherten Grenzwerts der Druckdifferenz, nachdem das Referenzzeitintervall beginnend zu dem Zeitpunkt des Erzeugens (130) eines Anfangsdrucks verstrichen ist; und
- Detektieren (175) eines Lecks in dem Kraftstofftanksystem, wenn die Linearitätsmetrik darauf hinweist, dass die gemessene Druckdifferenz eine nichtlineare Funktion der Zeit ist und wenn berechnet wird, dass der angenäherte Grenzwert innerhalb eines vorgegebenen Abstands zu dem zweiten Referenzdruck liegt.

2. Verfahren (100) nach Anspruch 1, wobei der Schritt des Erzeugens (130) ferner das Erzeugen eines Anfangsdrucks in dem Kraftstofftanksystem, der größer als der zweite Referenzdruck ist, umfasst.

3. Verfahren (100) nach Anspruch 1, wobei der Schritt des Erzeugens (130) ferner das Erzeugen eines Anfangsdrucks in dem Kraftstofftanksystem, der geringer als der zweite Referenzdruck ist, umfasst.

4. Verfahren (100) nach einem der Ansprüche 1-3, wobei das Bestimmen (140) einer Druckdifferenz ferner das wiederholte Messen eines Drucks in dem Kraftstoffsystem und das Vergleichen des gemessenen Drucks mit dem ersten Referenzdruck, um die Druckdifferenz zu bestimmen, sowie das wiederholte Speichern der bestimmten Druckdifferenz zusammen mit einem entsprechenden Messzeitpunkt umfasst.

5. Verfahren (100) nach einem der Ansprüche 1-4, wobei das Bestimmen (150) einer Linearitätsmetrik den Schritt des Anpassens eines nichtlinearen Datenmodells an die gemessenen Druckdifferenzdaten und auch das Bewerten der Ähnlichkeit zwischen dem angepassten nichtlinearen Datenmodell und den überwachten Druckdifferenzdaten umfasst, wodurch die Nichtlinearität der überwachten Druckdaten als eine Funktion der Zeit bestimmt wird.

6. Verfahren (100) nach Anspruch 5, wobei das Bestimmen (150) einer Linearitätsmetrik ferner das Anpassen eines linearen Datenmodells an die überwachten Druckdifferenzdaten, sowie das Auswählen des linearen Modells oder des nichtlinearen Modells, das die größte Ähnlichkeit mit den überwachten Druckdifferenzdaten aufweist, umfasst, wodurch die Nichtlinearität der überwachten Druckdaten als eine Funktion der Zeit quantifiziert wird.

7. Verfahren (100) nach Anspruch 5 oder 6, wobei das lineare oder nichtlineare Datenmodell, das mittels eines Zeitfensters mit vorgegebenen Anfangszeitpunkten und Endzeitpunkten ausgewählt worden ist, an eine Teilmenge der überwachten Druckdifferenzdaten angepasst wird.

8. Verfahren (100) nach Anspruch 6 oder 7, wobei das nichtlineare Modell entweder ein exponentielles Modell des Drucks P(t) über die Zeit t ist, wobei das exponentielle Modell die Parameter A, B, C und k gemäß P(t) = Ae^{-kt} + Ct + B umfasst, oder ein affines Polynommodell eines vorgegebenes Grades ist, wobei das Polynommodell Parameter, die die Koeffizienten der Polynomfunktion beschreiben, enthält.

9. Verfahren (100) nach einem der Ansprüche 5-8, wobei das Anpassen eines Datenmodells eine Methode der kleinsten Quadrate zum Anpassen umfasst und wobei das Auswählen das Auswählen anhand der Restabweichung der kleinsten Quadrate des linearen Modells und des nichtlinearen Modells umfasst.

10. Leck-Detektionssystem (300) zum Detektieren eines Lecks in einem Kraftstofftanksystem (310), wobei das Leck-Detektionssystem (300) eine Steuereinheit (340) umfasst, die konfiguriert ist, eine Druckdifferenz zwischen einem Druck, der in dem Kraftstofftanksystem (310) erzeugt wird, und einem ersten Referenzdruck im Zeitablauf zu bestimmen und aufzuzeichnen,
**dadurch gekennzeichnet, dass**
die Steuereinheit (340) dazu ausgelegt ist, eine Linearitätsmetrik und einen angenäherten Grenzwert bezüglich eines zweiten Drucks zu bestimmen, wobei die Linearitätsmetrik darauf hinweist, ob die überwachte Druckdifferenz im Wesentlichen eine lineare Funktion der Zeit im Gegensatz zu einer nichtlinearen Funktion der Zeit ist, wobei der angenäherte Grenzwert auf einen Druck eines stabilen Zustands des Kraftstoffsystems (310) hinweist, in dem keine wesentliche Druckänderung im Zeitablauf deutlich wird, nachdem ein Referenzzeitintervall seit der Erzeugung des Drucks in dem Kraftstofftanksystem (310) verstrichen ist und wobei die Steuereinheit (340) dazu ausgelegt ist, ein Kraftstoffleck zu detektieren, wenn die Linearitätsmetrik darauf hinweist, dass die bestimmte Druckdifferenz eine nichtlineare Funktion der Zeit ist und der angenäherte Grenzwert innerhalb eines vorgegebenen Abstands zu einem zweiten Referenzdruck liegt.

11. Leck-Detektionssystem (300) nach Anspruch 10, wobei die Steuereinheit (340) ferner dazu ausgelegt ist, die Parameter eines nichtlinearen Datenmodells einzustellen, um die gemessenen Druckdifferenzdaten anzupassen und auch um die Linearitätsmetrik durch Berechnen der Differenz zwischen den gemessenen Druckdaten und dem eingestellten nichtlinearen Datenmodell zu bestimmen und um auch den angenäherten Grenzwert durch Extrapolation des eingestellten nichtlinearen Datenmodells zu bestimmen.

12. Leck-Detektionssystem (300) nach Anspruch 11, wobei die Steuereinheit (340) ferner dazu ausgelegt ist, die Parameter des nichtlinearen Datenmodells einzustellen, um eine Zielfunktion der kleinsten Quadrate zu minimieren und um die Linearitätsmetrik mittels der Restabweichung der kleinsten Quadrate des eingestellten nichtlinearen Modells bezüglich der gemessenen Druckdifferenz zu bestimmen.

13. Leck-Detektionssystem (300) nach Anspruch 12, wobei die Steuereinheit (340) ferner dazu ausgelegt ist, ein Kraftstoffleck zu detektieren, wenn der bestimmte angenäherte Grenzwert der überwachten Druckdifferenz innerhalb eines ersten vorgegebenen Abstands zu dem zweiten Referenzdruck liegt und die bestimmte Linearitätsmetrik auf eine nichtlineare Änderung der überwachten Druckdifferenz im Zeitablauf im Gegensatz zu einer linearen Änderung der überwachten Druckdifferenz im Zeitablauf hinweist.

14. Leck-Detektionssystem (300) nach einem der Ansprüche 12-13, wobei die Steuereinheit (340) ferner dazu ausgelegt ist, die Unversehrtheit des Kraftstoffsystems zu überprüfen, wenn entweder der bestimmte angenäherte Grenzwert der gemessenen Druckdifferenz nicht innerhalb eines ersten vorgegebenen Abstands zu dem zweiten Referenzdruck liegt oder wenn die bestimmte Linearitätsmetrik auf eine lineare Änderung der gemessenen Druckdifferenz im Zeitablauf im Gegensatz zu einer nichtlinearen Änderung der gemessenen Druckdifferenz im Zeitablauf hinweist.

## Revendications

1. Procédé (100) de détection d'une fuite dans un système de réservoir de carburant, le procédé (100) comportant les étapes consistant à :
• régler (110) une première valeur de pression de référence ;
• générer (130) une pression initiale dans le système de réservoir de carburant ;
• déterminer (140) une différence de pression entre la pression dans le système de réservoir de carburant et la première pression de référence ;
• déterminer (150) une métrique de linéarité, en comparant la différence de pression déterminée à au moins un modèle parmi un modèle linéaire et un modèle non linéaire de données, la métrique de linéarité quantifiant la non-linéarité de ladite différence de pression en fonction du temps ;
• détecter (170) une fuite dans le système de réservoir de carburant d'après la métrique de linéarité, une fonction de différence de pression non linéaire dans le temps étant indicative d'une fuite dans le système de réservoir de carburant ;
**caractérisé en ce que** le procédé comporte en outre les étapes consistant à :
• régler (115) une deuxième valeur de pression de référence ;
• régler (120) un intervalle de temps de référence ;
• déterminer (160) une valeur limite approchée de la différence de pression après que l'intervalle de temps de référence s'est écoulé à partir de l'instant de génération (130) d'une pression initiale ; et
• détecter (175) une fuite dans le système de réservoir de carburant si la métrique de linéarité indique que la différence de pression mesurée est une fonction non linéaire du temps, et qu'il est calculé que la valeur limite approchée se situe en-deçà d'une distance prédéterminée par rapport à la deuxième pression de référence.

2. Procédé (100) selon la revendication 1, l'étape consistant à générer (130) comportant en outre la génération d'une pression initiale dans le système de réservoir de carburant qui est supérieure à la deuxième pression de référence.

3. Procédé (100) selon la revendication 1, l'étape consistant à générer (130) comportant en outre la génération d'une pression initiale dans le système de réservoir de carburant qui est inférieure à la deuxième pression de référence.

4. Procédé (100) selon l'une quelconque des revendications 1 à 3, la détermination (140) d'une différence de pression comportant en outre les étapes consistant à mesurer de façon répétée une pression dans le système de carburant, et à comparer ladite pression mesurée à la première pression de référence afin de déterminer la différence de pression, ainsi qu'à stocker de façon répétée la différence de pression déterminée accompagnée d'un instant de mesure correspondant.

5. Procédé (100) selon l'une quelconque des revendications 1 à 4, la détermination (150) d'une métrique de linéarité comportant les étapes consistant à ajuster un modèle non linéaire de données aux données de différence de pression mesurée et également à évaluer la ressemblance entre le modèle non linéaire de données ajusté et les données de différence de pression observée, déterminant ainsi la non-linéarité des données de pression observée en fonction du temps.

6. Procédé (100) selon la revendication 5, la détermination (150) d'une métrique de linéarité comportant en outre les étapes consistant à ajuster un modèle linéaire de données aux données de différence de pression observée, ainsi qu'à sélectionner le modèle linéaire ou le modèle non linéaire qui présente la ressemblance la plus proche aux données de différence de pression observée, quantifiant ainsi la non-linéarité des données de pression observée en fonction du temps.

7. Procédé (100) selon la revendication 5 ou la revendication 6, le modèle linéaire ou non linéaire de données étant ajusté à un sous-ensemble des données de différence de pression observée, sélectionné au moyen d'une fenêtre temporelle d'instants de début et de fin prédéterminés.

8. Procédé (100) selon la revendication 6 ou la revendication 7, le modèle non linéaire étant soit un modèle exponentiel de pression P(t) au cours du temps t, ledit modèle exponentiel comportant des paramètres A, B, C et k, selon P(t) =Ae^{-kt}+Ct+B, ou un modèle polynomial affine d'un degré prédéterminé, ledit modèle polynomial comportant des paramètres décrivant les coefficients du fonction polynomiale.

9. Procédé (100) selon l'une quelconque des revendications 5 à 8, l'ajustement d'un modèle de données comportant un procédé d'ajustement par moindres carrés, et la sélection comportant une sélection d'après l'erreur résiduelle aux moindres carrés du modèle linéaire et du modèle non linéaire de données.

10. Système (300) de détection de fuites destiné à détecter une fuite dans un système (310) de réservoir de carburant, le système (300) de détection de fuites comportant une unité (340) de commande configurée pour déterminer et enregistrer une différence de pression entre une pression générée dans le système (310) de réservoir de carburant et une première pression de référence au cours du temps,
**caractérisé en ce que**
l'unité (340) de commande est prévue pour déterminer une métrique de linéarité et une valeur limite approchée par rapport à une deuxième pression, la métrique de linéarité indiquant si la différence de pression observée est essentiellement une fonction linéaire du temps par opposition à une fonction non linéaire du temps, la valeur limite approchée indiquant une pression stationnaire du système de carburant (310) après qu'un intervalle de temps de référence s'est écoulé depuis la génération de pression dans le système (310) de réservoir de carburant, signifiée par l'absence de variation significative de pression au cours du temps, et **en ce que** l'unité (340) de commande est prévue pour détecter une fuite de carburant si la métrique de linéarité indique que la différence de pression déterminée est une fonction non linéaire du temps, et si la valeur limite approchée se situe en-deçà d'une distance prédéterminée par rapport à une deuxième pression de référence.

11. Système (300) de détection de fuites selon la revendication 10, l'unité (340) de commande étant en outre prévue pour adapter les paramètres d'un modèle non linéaire de données pour s'ajuster aux données de différence de pression mesurée, et également pour déterminer la métrique de linéarité au moyen d'un calcul de la différence entre les données de pression mesurée et le modèle non linéaire de données adapté, et pour déterminer également la valeur limite approchée par extrapolation du modèle non linéaire de données adapté.

12. Système (300) de détection de fuites selon la revendication 11, l'unité (340) de commande étant en outre agencée pour adapter les paramètres du modèle non linéaire de données de façon à minimiser une fonction objectif aux moindres carrés, et pour déterminer la métrique de linéarité au moyen de l'erreur résiduelle aux moindres carrés du modèle non linéaire adapté par rapport à la différence de pression mesurée.

13. Système (300) de détection de fuites selon la revendication 12, l'unité (340) de commande étant en outre agencée pour détecter une fuite de carburant si la valeur limite approchée déterminée de la différence de pression observée se situe en-deçà d'une première distance prédéterminée par rapport à la deuxième pression de référence et si la métrique de linéarité déterminée indique une variation non linéaire de la différence de pression observée au cours du temps par opposition à une variation linéaire de la différence de pression observée au cours du temps.

14. Système (300) de détection de fuites selon l'une quelconque des revendications 12 à 13, l'unité (340) de commande étant en outre agencée pour confirmer l'intégrité du système de carburant si la valeur limite approchée déterminée de la différence de pression mesurée ne se situe pas en-deçà d'une première distance prédéterminée par rapport à la deuxième pression de référence ou si la métrique de linéarité déterminée indique une variation linéaire de la différence de pression mesurée au cours du temps par opposition à une variation non linéaire de la différence de pression mesurée au cours du temps.
